(19) **Europäisches Patentamt**

**European Patent Office**

**Office européen des brevets**

(11) Numéro de publication : **0 291 404 B1**

(12) **FASCICULE DE BREVET EUROPEEN**

(45) Date de publication du fascicule du brevet :
**02.01.92 Bulletin 92/01**

(21) Numéro de dépôt : **88401137.0**

(22) Date de dépôt : **10.05.88**

(51) Int. Cl.⁵ : $G01H\ 9/00$, $G02B\ 6/28$

(54) **Dispositif pour la détection de vibrations comportant une fibre optique multimode comme élément sensible.**

(30) Priorité : **11.05.87 FR 8706568**

(43) Date de publication de la demande :
**17.11.88 Bulletin 88/46**

(45) Mention de la délivrance du brevet :
**02.01.92 Bulletin 92/01**

(84) Etats contractants désignés :
**BE DE GB IT SE**

(56) Documents cités :
**EP-A- 0 051 727**
**WO-A-79/00841**
**DE-A- 2 916 999**
**US-A- 4 297 887**

(56) Documents cités :
**PROCEEDINGS FIRST INTERNATIONAL CONFERENCE ON OPTICAL FIBRE SENSORS, 26-28 avril 1983, pages 23-27, IEE, Londres, GB; M.L. HENNING et al.: "Optical fibre hydrophones with down lead insensitivity"**
**APPLIED OPTICS, vol. 18, no. 5, 1er mars 1979, pages 666-670, New York, US; M.R. LAYTON et al.: "Optical fiber acoustic sensor utilizing mode-mode interference"**
**OPTICS LETTERS, vol. 12, no. 9, septembre 1987, pages 729-731; B.Y. KIM et ql.: "Use of highly elliptical core fibers for two-mode fiber devices"**

(73) Titulaire : **PHOTONETICS**
**52 Avenue de l'Europe**
**F-78160 Marly le Roi (FR)**

(72) Inventeur : **Jeunhomme, Luc**
**5 Square Lavoisier**
**F-78330 Fontenay le Fleury (FR)**

(74) Mandataire : **Fréchède, Michel et al**
**Cabinet Plasseraud 84, rue d'Amsterdam**
**F-75009 Paris (FR)**

## Description

La présente invention a pour objet un dispositif pour la détection de vibrations comportant une fibre optique multimode comme élément sensible, destiné particulièrement à l'analyse des vibrations de machines (telles que moteurs et autres machines tournantes) et de structures (telles que transformateurs électriques et structures mécaniques), à la détection d'instrusions (notamment d'intrusions périmétriques), à la détection d'enlèvement d'objets, à la surveillance respiratoire de malades, à la réalisation de déclencheurs d'éclairage et/ou d'alarmes en réponse à l'apparition, ou la variation de la fréquence, de vibrations.

Le dispositif selon l'invention met en oeuvre, comme élément sensible détectant des vibrations ou la modification de la fréquence de vibrations, une fibre optique multimode dont l'une de ses extrémités est éclairée par une source de lumière cohérente et dont l'éclairement de l'autre extrémité est observé au moyen d'un photodétecteur.

On sait en effet, par exemple d'après le livre intitulé "Optical Fibre Communication Systems", de C.P. Sandbank, édité par John Wiley and Sons, New York, 1980, pages 249 à 265, que dans une fibre optique multimode, éclairée à une première extrémité, constituant face d'entrée, par une lumière cohérente, la lumière suit différents chemins optiques et que dans chaque chemin optique la lumière est modulée d'une manière différente par des perturbations externes, telles que des vibrations, des variations de température et/ou de pression. Il en résulte donc à l'autre extrémité, constituant face de sortie, de la fibre optique que les modes de la fibre optique multimode se combinent pour former une figure d'interférences prenant l'aspect d'une tacheture granulaire, appelée "speckle".

Ce phénomène de speckle est considéré comme défavorable dans les systèmes de transmissions optiques car il produit ce que l'on appelle un "bruit modal" qui est nuisible à la performance de tels systèmes de transmission.

Par contre on a pensé à utiliser le speckle induit par des vibrations pour constituer des capteurs à fibre optique multimode

— soit pour mesurer un débit de fluide en plaçant une fibre optique multimode dans le courant fluide dont on veut mesurer le débit, l'écoulement fluide engendrant des vibrations qui produisent, à la sortie de la fibre optique multimode, lorsqu'elle est éclairée à son entrée par une lumière cohérente, un speckle qui est observé et analysé ; en particulier J.H. Lyle et C.W. Pitt ont décrit dans "Electronics Letters" du 19 mars 1981, volume 18, n° 6, pages 244 et 245, un débitmètre qui comporte un laser hélium-néon émettant une lumière cohérente qui excite l'extrémité d'entrée d'une fibre optique multimode traversant une conduite dans laquelle se déplace le fluide dont on veut mesurer le débit ; le speckle, formé à l'extrémité de sortie de la fibre optique multimode par les vibrations produites au voisinage de la fibre par l'écoulement du fluide dans la conduite, est observé par un photodétecteur disposé à 15 cm de cette extrémité de sortie, le signal de sortie du photodétecteur étant affiché sur un analyseur de spectre audiofréquence ;

— soit pour détecter une intrusion dans une zone à protéger, en disposant une fibre optique multimode en boucle presque fermée autour de cette zone ; ainsi Chung-yee Leung, I-fan Chang et Si-Hsu ont décrit, dans les "Proceedings of the 4th International Conference on Optical Fiber Sensors (Tokyo 7-9 octobre 1986), un dispositif de détection d'intrusion comportant un laser dont la lumière est focalisée sur la face d'entrée de la fibre optique multimode disposée en boucle presque fermée et dont le speckle apparaissant sur la face de sortie de cette fibre est détecté par plusieurs photodétecteurs de petite dimension disposés au voisinage du centre du speckle, les signaux de sortie des photodétecteurs étant amplifiés, filtrés (par des filtres passe-bande de 10 à 2000 Hz), rectifiés, additionnés et bloqués.

L'invention vise à réaliser un dispositif pour la détection des vibrations, mettant en oeuvre, comme ceux décrits précédemment, une fibre optique multimode, mais il se distingue de ceux-ci par le fait qu'on prévoit, d'une part, une fibre optique monomode entre la source de lumière cohérente et la face d'entrée de la fibre optique multimode et, d'autre part, au moins une fibre optique, ayant un diamètre de coeur plus petit que celui de la fibre optique multimode, entre la face de sortie de cette fibre optique multimode, sur laquelle apparaît le speckle, et au moins un photodétecteur associé.

D'autre part, le brevet des Etats-Unis BUCARO n° 4.297.887 décrit un capteur de vibrations acoustiques dans un milieu fluide et permettant la réalisation d'hydrophones. Ce capteur utilise comme élément sensible deux fibres optiques placées en parallèle dans l'élément perturbateur. Dans chacune des fibres, les ondes acoustique externes induisent des variations de longueur de trajet optique. Dans le cas intéressant où les deux fibres ne sont pas strictement identiques (les deux possibilités évoquées par ce brevet sont d'utiliser deux fibres de longueurs différents ou bien d'avoir une fibre protégée par une gaine et l'autre non protégée), la différence de trajet optique entre les deux fibres permet, par recombinaison des ondes optiques, d'obtenir des interférences dues au déphasage relatif des deux ondes.

Ce brevet met en oeuvre deux fibres monomodes différentes. Au contraire selon la présente invention on met en oeuvre comme élément sensible une seule fibre multimode, les interférences obtenues étant dues à des trajets optiques différents entre les différents modes optiques se propageant dans la fibre.

Comme état de la technique on peut également mentionner un article de M.L. Henning et al intitulé "Optical fibre hydrophones with down lead insensitivity" publié dans Proceedings First International Conference on Optical Fibre Sensors, 26-28 avril 1983, pages 23-27, IEE, Londres.

Dans le capteur décrit dans cet article l'élément sensible est constitué d'une seule fibre optique et on fait interférer deux ondes optiques de fréquences optiques légèrement différentes. On observe donc non pas des interférences entre les différents modes guidés, mais les interférences entre deux ondes, se propageant dans le même mode mais possédant des fréquences optiques différentes. Comme dans le brevet américain n° 4.297.887 précité, la fibre sensible est idéalement monomode.

Enfin on peut également mentionner un article de référence qui expose les principes physiques mis en jeu dans des capteurs à fibre optique, à savoir l'article de M.R. Layton et J.A. Bucaro intitulé "Optical fiber acoustic sensor utilizing mode-mode interference" publié dans Applied Optics, vol. 18, n° 5, 1er mars 1979, pages 666-670, New York.

Cet article expose comment on peut établir une relation mathématique donnant la variation de la longueur de trajet optique pour un mode guidé dans une fibre optique en fonction de la pression extérieure. L'auteur conclut à la possibilité de réaliser un capteur basé sur ce principe, mais sans en donner aucun mode de réalisation avec l'utilisation d'une fibre de réception de diamètre de coeur plus petit que le diamètre de coeur de la fibre sensible. De plus l'utilisation d'une fibre sensible possédant un grand nombre de modes guidés n'est pas abordée. Probablement Bucaro envisageait plutôt un dispositif selon son brevet américain précité.

Par rapport à l'ensemble de la technique précitée, l'invention a pour objet un dispositif pour la détection de vibrations comportant un élément sensible à fibre optique, une source de lumière cohérente, des moyens photodétecteurs et des moyens d'analyse de la sortie des moyens photodétecteurs, caractérisé par le fait que ledit élément sensible est constitué par une seule fibre optique de type multimode et par le fait qu'il comporte en outre, d'une part, une fibre optique monomode disposée entre la source de lumière cohérente et une première extrémité de la fibre optique multimode, constituant face d'entrée de celle-ci, et, d'autre part, au moins une fibre optique, dont le diamètre de coeur est plus petit que celui de la fibre optique multimode et qui est disposée entre l'autre extrémité de la fibre optique multimode, constituant face de sortie de celle-ci et sur laquelle apparaît un speckle, et les moyens photodétecteurs.

De préférence :

— la source de lumière cohérente est une diode laser ;
— les moyens photodétecteurs comportent au moins un photodétecteur constitué par une diode photodétectrice à semi-conducteur ;
— la fibre optique multimode comporte trois modes guidés ;
— le dispositif comporte plusieurs fibres optiques à diamètre de coeur plus petit que celui de la fibre optique multimode, les moyens photodétecteurs comportant un photodétecteur disposé en regard de l'extrémité de chacune de ces fibres optiques à diamètre de coeur réduit opposée à celle en regard de la face de sortie de la fibre optique multimode ;
— le photodétecteur unique ou chaque photodétecteur est suivi par un préamplificateur et un filtre coupant les basses fréquences, constitué avantageusement par un filtre passe-haut, le filtre unique ou les filtres débitant dans un analyseur de fréquence.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 est une vue d'ensemble d'un dispositif selon l'invention comportant trois fibres optiques à diamètre de coeur réduit.

La figure 2 est une coupe par II-II, à plus grande échelle, de la figure 1.

La figure 3, enfin, illustre une variante du couplage entre la fibre optique multimode constituant l'élément sensible du dispositif et une fibre optique à diamètre de coeur réduit.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un dispositif pour la détection des vibrations comportant une fibre optique multimode comme élément sensible, on s'y prend comme suit ou d'une manière analogue

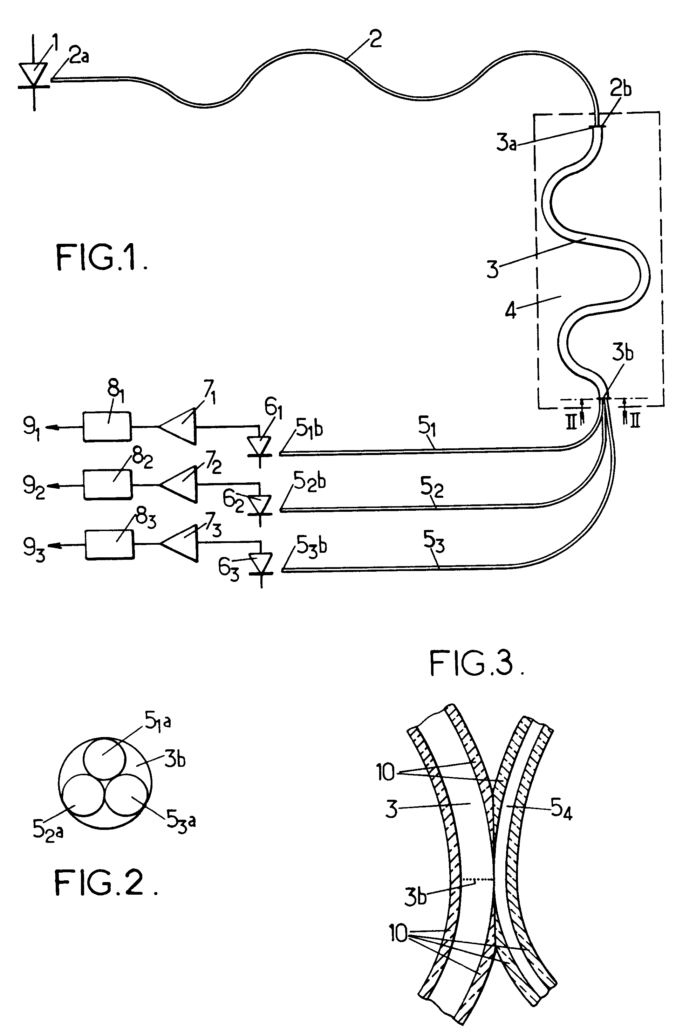

En se référant tout d'abord à la figure 1 et accessoirement à la figure 2, on voit qu'un dispositif selon l'invention comprend d'abord une source 1 de lumière cohérente, constituée avantageusement, comme illustré, par une diode laser du type monomode transversal et monomode longitudinal.

En regard de la zone émettrice de la source 1 de lumière cohérente est disposée une première extrémité 2a d'une fibre optique monomode 2 dont la seconde extrémité 2b est disposée en regard d'une extrémité ou face d'entrée 3a d'une fibre optique multimode 3 qui constitue l'élément sensible du dispositif et qui est disposée dans la zone 4 où se trouve la machine, la structure, le malade ou la zone à surveiller. Une microlentille (non représentée) sert à focaliser la lumière émise par la source 1 sur l'extrémité 2a, tandis qu'un connecteur ou une épissure (non représenté) de type connu peut avantageusement être disposé entre les extrémités 2b et 3a.

La lumière cohérente, émise par la diode laser ou source 1 et transmise par la fibre optique monomode 2 à l'extrémité 3a de la fibre optique multimode 3, engendre à l'autre extrémité ou face de sortie 3b de la fibre 3 un speckle ou tacheture granulaire comportant une mosaïque de grains ou zones clairs et sombres, l'aspect du speckle, c'est-à-dire la luminosité de chaque grain ou zone, étant modifié par toute vibration dans la zone 4 et qui agit sur la fibre optique multimode 3.

En principe il suffirait d'observer un seul grain du speckle, mais il est avantageux, pour augmenter le rapport signal/bruit, d'observer plusieurs grains de celui-ci. Cette observation est effectuée, conformément à une caractéristique de l'invention, non pas directement à l'extrémité 3b mais à distance en utilisant, pour la transmission à distance, une ou de préférence plusieurs fibres optiques constituées par une ou des fibres optiques monomodes et/ou par une ou des fibres optiques multimodes ayant un diamètre de coeur plus petit que le diamètre de coeur de la fibre optique multimode 3.

Dans le mode de réalisation de la figure 1, on a prévu trois fibres optiques monomodes $5_1$, $5_2$, $5_3$ et sur la figure 2 on aperçoit, d'une part, la section de coeur au niveau de la face de sortie 3b de la fibre optique multimode 3 et, d'autre part, les sections de coeur des trois extrémités ou faces d'entrée $5_1$a, $5_2$a, $5_3$a des fibres optiques $5_1$, $5_2$, $5_3$ respectivement.

L'autre extrémité au face de sortie $5_1$b, $5_2$b, $5_3$b de la fibre $5_1$, $5_2$, $5_3$ respectivement se trouve en regard d'un photodétecteur $6_1$, $6_2$, $6_3$ constitué par une photodiode du type PIN ou à avalanche. Les photodiodes $6_1$, $6_2$, $6_3$ débitent dans des préamplificateurs $7_1$, $7_2$, $7_3$ respectivement dont les sorties sont filtrées par des filtres passe-haut $8_1$, $8_2$, $8_3$ respectivement, qui suppriment par exemple les fréquences inférieures à 10 Hz.

Enfin les sorties $9_1$, $9_2$, $9_3$ des filtres passe-haut $8_1$, $8_2$, $8_3$ sont analysées dans un analyseur de spectre (non représenté).

Dans le mode de réalisation partiellement illustré sur la figure 3, la fibre optique multimode 3 est couplée à une seule fibre optique monomode $5_4$, non pas par son extrémité (comme dans le cas du mode de réalisation des figures 1 et 2), mais par l'intermédiaire d'un coupleur-séparateur latéral, le diamètre de coeur de la fibre optique monomode $5_4$ étant plus petit que le diamètre de coeur de la fibre optique multimode 3. Sur la figure 3, qui est à plus grande échelle que la portion correspondante de la figure 1 dans la zone de la coupe II-II, on aperçoit en coupe les gaines polies 10 entourant le coeur de chacune des fibres 3 et $5_4$.

A l'autre extrémité (non visible sur la figure 3) de

la fibre optique $5_4$ on prévoit les mêmes types d'éléments que ceux illustrés sur la figure 1, à savoir un photodétecteur, un préamplificateur et un filtre passe-haut dont la sortie est analysée par un analyseur de spectre.

On peut évidemment prévoir, entre la fibre multimode 3 et les fibres à diamètre de coeur réduit, telles que $5_1$, $5_2$, $5_3$, $5_4$, des systèmes de couplage autres qu'un connecteur ou épissure du type illustré sur la figure 1 ou qu'un coupleur-séparateur latéral à fibres polies du type illustré sur la figure 2, par exemple un coupleur multimodes vers une ou plusieurs fibres monomodes, par fusion étirage.

Dans un dispositif selon l'invention, la fibre multimode 3 est de préférence du type à gradient d'indice, bien que l'on puisse également utiliser des fibres multimodes à saut d'indice.

Avantageusement, la fibre multimode 3 est constituée par une fibre du type utilisé en télécommunications de 50 microns de diamètre de coeur et de 0,2 d'ouverture numérique, ou de préférence par une fibre comportant trois modes guidés à la longueur d'onde de travail.

Le fonctionnement du dispositif de la figure 1 est le suivant.

La lumière produite par la diode laser ou source 1 est transmise par la fibre optique monomode 2 à l'extrémité ou face d'entrée 3a de la fibre optique multimode 3. Cette lumière cohérente est modulée en phase, pendant sa propagation dans la fibre 3, par toute perturbation externe, notamment par toute vibration, se produisant dans la zone 4, et on notera que le dispositif selon l'invention présente l'avantage de permettre une détection non pas ponctuelle mais dans toute une zone, qui peut être relativement étendue. Cette modulation de phase produit, du fait que la lumière suit plusieurs chemins optiques dans une fibre optique multimode, une figure d'interférences sur l'autre extrémité ou face de sortie 3b de la fibre optique multimode 3, sous la forme d'un speckle.

Les variations de luminosité de trois zones ou grains du speckle sur la face de sortie 3b sont observées par les photodétecteurs à diodes $6_1$, $6_2$, $6_3$, à travers les fibres optiques $5_1$, $5_2$ et $5_3$ qui transmettent les variations de luminosité de ces trois zones ou grains.

Les sorties des photodétecteurs $6_1$, $6_2$, $6_3$ sont amplifiées par les préamplificateurs $7_1$, $7_2$, $7_3$ ; les filtres passe-haut $8_1$, $8_2$, $8_3$ ont pour effet d'éliminer les basses fréquences qui correspondent à des variations relativement lentes de température et de pression dans la zone 4 ; de ce fait les sorties $9_1$, $9_2$, $9_3$ ne sont fonction que des vibrations qui se produisent dans la zone 4. L'analyseur de spectre qui reçoit les sorties $9_1$, $9_2$, $9_3$ permet d'analyser ces vibrations.

Ces vibrations peuvent être observées et/ou provoquer un signal réalisant une alarme et/ou un éclairage, par exemple en cas de défaut respiratoire d'un malade surveillé, d'enlèvement d'objets dans un musée ou dans une collection privée, ou d'une intrusion (la fibre optique multimode 3 étant dans ce dernier cas soit enterrée pour une protection extérieure, soit disposée sous un tapis ou dans une porte pour une surveillance de pénétration dans un appartement ou un immeuble).

L'invention est essentiellement caractérisée par la présence des fibres optiques 2, d'une part, et $5_1$, $5_2$, $5_3$ ou $5_4$, d'autre part.

La présence de la fibre optique monomode 2 entre la source de lumière cohérente 1 et la face d'entrée 3a de la fibre optique multimode 3 présente l'avantage d'éviter que des perturbations qui pourraient se produire en dehors de la zone 4 à surveiller modifient le speckle sur la face de sortie 3b de la fibre 3, étant donné que la fibre monomode 2 n'est pas influencée par des perturbations et qu'elle transmet directement la lumière émise par la source 1 sur la face d'entrée 3a de la fibre 3 à l'intérieur de la zone 4.

La présence d'une ou plusieurs fibres optiques, telles que $5_1$, $5_2$, $5_3$ ou $5_4$, à diamètre de coeur plus petit que celui de la fibre multimode 3, entre la sortie de la face 3b de la fibre 3 sur laquelle apparaît le speckle et le ou les photodétecteurs, tels que $6_1$, $6_2$, $6_3$, permet d'éloigner le ou les photodétecteurs de la zone à surveiller 4 sans perturber le résultat de l'analyse de spectre portant sur les signaux de sortie, tels que $9_1$, $9_2$, $9_3$, sous l'effet de vibrations ou d'autres perturbations se produisant entre la zone de mesure 4 et le ou les photodétecteurs.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

**Revendications**

1. Dispositif pour la détection de vibrations comportant un élément sensible à fibre optique, ledit élément sensible étant constitué par une seule fibre optique du type multimode, une source (1) de lumière cohérente, des moyens photodétecteurs ($6_1$, $6_2$, $6_3$ ; $7_1$, $7_2$, $7_3$ ; $8_1$, $8_2$, $8_3$) et des moyens d'analyse des sorties ($9_1$, $9_2$, $9_3$) des moyens photodétecteurs, caractérisé par le fait qu'il comporte en outre, d'une part, une fibre optique monomode (2) disposée entre la source (1) de lumière cohérente et une première extrémité (3a) de la fibre optique multimode (3), constituant la face d'entrée de celle-ci, et, d'autre part, au moins une fibre optique ($5_1$, $5_2$, $5_3$ ; $5_4$), dont le diamètre de coeur est plus petit que celui de la fibre optique multimode (3) et qui est disposée entre l'autre extrémité (3b) de la fibre optique multimode (3), constituant la face de sortie de celle-ci et sur laquelle apparaît un speckle, et les moyens photodétecteurs ($6_1$, $6_2$, $6_3$ ; $7_1$, $7_2$, $7_3$ ; $8_1$, $8_2$, $8_3$).

2. Dispositif selon la revendication 1, caractérisé par le fait que la source (1) de lumière cohérente est une diode laser.

3. Dispositif selon la revendication 1 ou 2, caractérisé par le fait que les moyens photodétecteurs comportent au moins un photodétecteur ($6_1$, $6_2$, $6_3$) constitué par une diode photodétectrice à semi-conducteur.

4. Dispositif selon l'une quelconque des revendications précédentes, caractérisé par le fait que le dispositif comporte plusieurs fibres optiques ($5_1$, $5_2$, $5_3$ ; $5_4$), à diamètre de coeur plus petit que celui de la fibre optique multimode (3), les moyens photédecteurs comportant un photodétecteur ($6_1$, $6_2$, $6_3$) disposé en regard de l'extrémité de chacune de ces fibres optiques à diamètre de coeur réduit opposée à celle en regard de la face de sortie (3b) de la fibre optique multimode (3).

5. Dispositif selon la revendication 3 ou 4, caractérisé par le fait que le photodétecteur unique ou chaque photodétecteur ($6_1$, $6_2$, $6_3$) est suivi par un préamplificateur ($7_1$, $7_2$, $7_3$) et un filtre ($8_1$, $8_2$, $8_3$) coupant les basses fréquences, le filtre unique ou les filtres débitant dans un analyseur de fréquence.

6. Dispositif selon la revendication 5, caractérisé par le fait que le filtre unique ou chaque filtre est constitué par un filtre passe-haut.

7. Dispositif selon l'une quelconque des revendications 1 à 6, caractérisé par le fait que la fibre optique de diamètre de coeur réduit ou au moins une partie des fibres optiques de diamètre de coeur réduit est constituée par une ou des fibres monomodes ($5_1$, $5_2$, $5_3$ ; $5_5$).

8. Dispositif selon l'une quelconque des revendications 1 à 6, caractérisé par le fait que la fibre optique multimode (3) comporte trois modes guidés.

**Patentansprüche**

1. Vorrichtung zur Schwingungsfeststellung mit einer als empfindliches Element dienenden multimoden optischen Faser, wobei das empfindliche Element eine multimode, optische Faser, eine kohärente Lichtquelle (1), Mittel zur Photodetektion ($6_1$, $6_2$, $6_3$, $7_1$, $7_2$, $7_3$, $8_1$, $8_2$, $8_3$) und Mittel zur Anlayse der Ausgänge ($9_1$, $9_2$, $9_3$) der Mittel zur Photodetektion aufweist, dadurch gekennzeichnet, daß es außerdem zum einen eine monomode optische Faser (2) aufweist, die zwischen der Lichtquelle (1) und einem ersten Ende (3a) der multimoden optischen Faser (3) angeordnet ist, welches die Eintrittsseite desselben darstellt, und zum anderen wenigstens eine optische Faser ($5_1$, $5_2$, $5_3$, $5_4$), deren Kern-Durchmesser kleiner ist als der der multimoden optischen Faser (3), und die zwischen dem andere Ende (3b) der multimoden, optischen Faser (3), die den Ausgang derselben darstellt und auf welcher das Spektrum erscheint, angeordnet ist und mittel zur Photodetektion ($6_1$, $6_2$, $6_3$, $7_1$, $7_2$, $7_3$, $8_1$, $8_2$, $8_3$).

2. Vorrichtung nach Anspruch 1, dadurch gekennzeichnet, daß die kohärente Lichtquelle (1) ein Diodenlaser ist.

3. Vorrichtung nach einem der Ansprüche 1 oder 2, dadurch gekennzeichnet, daß die Mittel zur Photodetektion mindestens einen Photodetektor ($6_1$, $6_2$, $6_3$) enthalten, der aus einer photodetektierenden Halbleiterdiode besteht.

4. Vorrichtung nach einem der vorangegangenen Ansprüche, dadurch gekennzeichnet, daß die Vorrichtung mehrere optischen Fasern ($5_1$, $5_2$, $5_3$, $5_4$), deren Kern-Durchmesser wesentlich kleiner ist als der der vielmoden optischen Faser (3), und Mittel zur Photodetektion, die einen Photodetektor ($6_1$, $6_2$, $6_3$) enthalten, aufweist, der in bezug auf das Ende einer jeder dieser optischen Fasern mit reduziertem Kern-Durchmesser und diesem gegenüberliegend in bezug auf die Ausgangsseite (3b) der multimoden optischen Faser (3) angeordnet ist.

5. Vorrichtung nach einem der Ansprüche 3 oder 4, dadurch gekennzeichnet, daß ein Photodetektor oder jeder der Photodetektoren ($6_1$, $6_2$, $6_3$) von einem Vorverstärker ($7_1$, $7_2$, $7_3$) und einem Filter ($8_1$, $8_2$, $8_3$), der die tiefen Frequenzen abschneidet, gefolgt wird, wobei ein Filter oder die Filter in einem Frequenzanalysator münden.

6. Vorrichtung nach Anspruch 5, dadurch gekennzeichnet, daß ein Filter oder jeder Filter mit einem Hochpaßfilter versehen ist.

7. Vorrichtung nach einem der vorangehenden Ansprüche 1 bis 6, dadurch gekennzeichnet, daß die optische Faser mit reduziertem Kern-Durchmesser oder wenigstens ein Teil der optischen Fasern mit reduziertem Kern-Durchmesser aus einer oder den monomoden Fasern ($5_1$, $5_2$, $5_3$, $5_5$) besteht.

8. Vorrichtung nach einem der vorangehenden Ansprüche 1 bis 6, dadurch gekennzeichnet, daß die multimoden optischen Fasern (3) aus drei Modenleitern bestehen.

## Claims

1. A vibration detection device having an optical fiber sensitive element, said sensitive element being formed by a single optical fiber of multimode type, a coherent light source (1), photodetecting means ($6_1$, $6_2$, $6_3$) and means for analysing the outputs ($9_1$, $9_2$, $9_3$) of the photodetector means, characterized in that it further comprises, on the one hand, a monomode optical fiber (2) disposed between the coherent light source (1) and a first end (3a) of the multimode optical fiber (3) forming the input face thereof, and, on the other hand, at least one optical fiber ($5_1$, $5_2$, $5_3$, $5_4$), whose core diameter is smaller than that of the multimode optical fiber (3) and which is disposed between the other end (3b) of the multimode optical fiber (3), forming the output face thereof and on which a speckle appears, and the photodetector means ($6_1$, $6_2$, $6_3$ ; $7_1$, $7_2$, $7_3$ ; $8_1$, $8_2$, $8_3$).

2. The device as claimed in claim 1, characterized in that said coherent light source (1) is a laser diode.

3. The device as claimed in claim 1 or 2, characterized in that the photodetector means comprise at least one photodetector ($6_1$, $6_2$, $6_3$) formed by a semiconductor photodetector diode.

4. The device as claimed in one of the previous claims, characterized in that the device comprises several optical fibers ($5_1$, $5_2$, $5_3$, $5_4$) whose core diameter is smaller than that of the multimode optical fiber (3), the photodetector means comprising a photodetector ($6_1$, $6_2$, $6_3$) disposed opposite the end of each of these optical fibers with reduced core diameter opposite the one facing the output face (3b) of the multimode optical fiber (3).

5. The device as claimed in claim 3 or 4, characterized in that the simple photodetector ($6_1$, $6_2$, $6_3$) or each photodetector is followed by a preamplifier ($7_1$, $7_2$, $7_3$) and a filter ($8_1$, $8_2$, $8_3$) cutting off the low frequencies, the single filter or the filters feeding into a frequency analyser.

6. The device as claimed in claim 5, characterized by said single filter or each filter formed by a high-pass filter.

7. The device as claimed in anyone of claims 1 to 6, characterized in that the optical fiber of reduced core diameter or at least a portion of the optical fibers of reduced core diameter is formed by one or more monomode fibers ($5_1$, $5_2$, $5_3$, $5_5$).

8. The device as claimed in anyone of claims 1 to 6, wherein said multimode optical fiber (3) comprises three guided modes.

FIG.1.

FIG.3.

FIG.2.